Europäisches Patentamt

**European Patent Office**

**Office européen des brevets**

(19)

(11) Publication number: **0 117 001**

**A1**

(12) **EUROPEAN PATENT APPLICATION**

(21) Application number: **84200193.5**

(22) Date of filing: **14.02.84**

(51) Int. Cl.³: **H 05 B 3/22**
**H 05 B 3/64, F 24 D 13/02**

(30) Priority: **22.02.83 GB 8304863**

(43) Date of publication of application:
**29.08.84 Bulletin 84/35**

(84) Designated Contracting States:
**AT BE CH DE FR GB IT LI LU NL SE**

(71) Applicant: **CARBOLITE FURNACES LIMITED**
**Bamford Mill**
**Bamford Sheffield S30 2AU(GB)**

(72) Inventor: **Whitney, Ian**
**22, Oakerthorpe Road**
**Bolehill Wirksworth Derbyshire(GB)**

(74) Representative: **Long, Edward Anthony et al,**
**Hulse & Co. Cavendish Buildings West Street**
**Sheffield S1 1ZZ(GB)**

(54) **Heating panels.**

(57) A laminar heating panel (1) comprises a resistance wire (2) insulated with a glass fibre wrapping (18) or other glass or ceramic coating, the wire (2) being enclosed between close fitting first and second layers (3, 3A, 3B) of heat conducting material, with mechanical connection means (5) connecting the first and second layers (3, 3A, 3B) together.

FIG 1

"HEATING PANELS"

This invention relates to electric heating panels suitable for use in ovens, furnaces and other heating appliances such as toasters, grills, space heaters and heating panels for pipes and other vessels, including high temperature and high heat flux applications.

At present most ovens are heated by means of metal sheathed, mineral insulated elements, while a known heating panel is disclosed in G.B. patent 911744, but the latter requires firstly the presence of an adhesive between its two sheets of metal foil, and secondly the enclosure of the wire heating element in an insulating material of rubber or synthetic resinous plastic.  Both the use of an adhesive bonding agent and rubber or plastics insulating material impose temperature limitations, and hence use restrictions, on the panel to the extent that a maximum continuous use temperature of approximately 200°C only, is possible.

The object of the present invention is to provide a heating panel capable of achieving continuous use temperatures substantially in excess of 200°C.

According to the present invention there is provided a laminar heating panel comprising a resistance wire insulated with a glass fibre wrapping or other glass or ceramic coating, the wire being enclosed between close fitting first and second layers of heat conducting material, with mechanical connection means connecting the first and second layers together.

The heating panel in accordance with the invention, by avoiding the use of adhesive and of rubber or plastics insulation, provides the advantages of a capability of continuous use at temperatures in the range of approximately 300°C to approximately 700°C; as well as a relatively low manufacturing cost; a large heating surface area which results in uniform temperature and long panel life; ease of fitting and replacement by unskilled persons; and, in some embodiments to be detailed later, a capability of easily bending the panels round curved surfaces, while the invention in one form is particularly applicable to heating panels for use in ovens, e.g. for domestic use, laboratory use etc.

The wire may be a spiral or may have a plurality of return bends. The return bends may be curved, in which case the wire would have a generally sinuous or serpentine form; or may be acute angled, in which case the wire would have a zig-zag form; or may be rectangular, by incorporating two right angle bends. The effect is the same viz. to provide a considerable wire length within the dimensional constraints placed on the panel size by its intended use.

Preferably, at least one of the two heat conducting layers is of foil - conveniently metal foil. In a first embodiment, both layers are of foil. In a second embodiment, the first layer may be of a relatively rigid heat conducting sheet and the second layer may be of foil. The desirable close contact between the heat conducting layers and the insulated wire is conveniently effected by deforming the or each foil layer around the wire, which deformation also serves to hold the wire in place.

In detail, the wire used may be nickel chromium, iron-chromium-aluminium or other suitable resistance alloy. The foil may be aluminium, nickel or other ductile metal alloy. Mechanical connection means are rivets, wire staples, pressure forming between dies which does or does not puncture the foil, spot welding, folded over edge portions, punched apertures with or without rolled over burrs or flash, or sewing with glass fibre or other high temperature resistant fibre.

The invention will be be described in greater detail, by way of example, with reference to the accompanying drawings, in which:-

Figure 1 is a side elevation of a panel in accordance with the invention.

Figure 2 shows diagrammatically a method of manufacturing the panel of Figure 1;

Figure 3 is a plan view of a continuous sheet of panelling prior to cutting into individual panels; and

Figures 4 to 7 illustrate arrangements, for dissipating heat from the electrical connection tails.

The panel 1 is approximately 360 mm x 420 mm rated at 750 W at 240 volts, and comprises a sinuous resistance wire 2 e.g. a proprietory glass insulated wire known as P.E.L. wire, manufactured and supplied by Pickstone Equipment Limited of Thetford, Norfolk, England. The wire may be 28 SWG with a resistance value of 9.74 ohms per metre.

The wire 2 has curved return bends 6 and is restrained between first and second layers of heat conducting material, constituted by two sheets of 0.1 mm aluminium foil 3 which are in close contact and which are secured together by mechanical means 5, to be described later. The foil/wire/foil laminate thus produced is capable of being bent, for accurate fitting around a curved surface, as may sometimes be required.

At the points where the wire 2 leaves the panel 1 for the necessary connection to the electrical supply, additional pieces of foil 3C are positioned at both sides of the panel to provide mechanical reinforcement and to conduct heat away from the "tails" 4. The additional pieces of foil 3C are secured to the panel 1 and each other by small rivets 5A or other means.

With a heating panel 1 of this type fitted into a 62 litre capacity laboratory oven, and the panel located outside the oven chamber underneath the oven floor, the oven performed in a satisfactory manner with temperature distribution complying with BS 2648 without the use of a fan.

The resistance between the heating element wire and the aluminium foil was greater than 10 M ohms when measured using a 500 volt "Megger" resistance meter.

In another example a heating panel was constructed using 28 SWG nickel-chromium wire which was used carrying a current of 10 amps, giving a much higher heat flux.

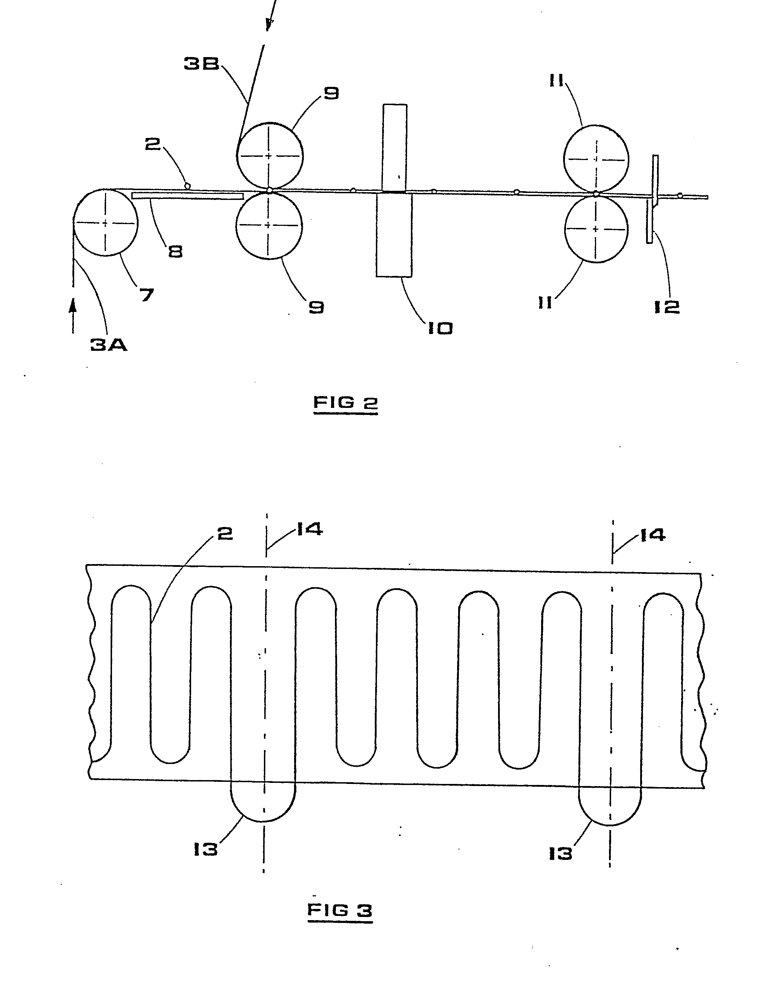

Referring to Figure 2 and a preferred method of manufacture, a first layer of foil 3A is dispensed from a reel (not shown) and passes round a roller 7, and along a table 8. Above the table 8 is a wire dispensing mechanism (not shown) which lays wire 2 onto the first layer of foil 3A. A second layer of foil 3B is dispensed from a reel (not shown) and passes round one of a pair of pinch rollers 9 together with the wire 2 and the first layer of foil 3A.    The pinch rollers 9 are covered in a layer of resilient material such as rubber and roll the two layers of foil 3A, 3B together, plastically deforming the foil round the wire 2.    The wire dispenser, foil dispensers and pinch rolls are controlled in a manner which allows the wire to be layed in a predetermined pattern.

The foil-wire-foil laminate passes from the pinch rolls to a fixing station 10. At this station the two layers of foil are mechanically connected at a plurality of points across the width of the panel 1 between each pass of the wire 2.    The connection method chosen depends on the nature of the foil and the operating conditions of the heating panel 1 when in use.    The method may include use of one or more of rivets, wire staples, pressure forming between dies in a manner which does not puncture the foil, pressure forming between the dies in a manner which does puncture the foil, spot welding, folded over edge portions, punched apertures with or without rolled over burrs or flash, or sewing with glass fibre or other high temperature resistant fibre.

The continuous laminate of part-made panels then passes through a second pair of pinch rolls 11 to a cutting station 12 where the individual panels 1 are separated by being cut from the continuous laminate.

Edge rolling (comprises folding the edge over approximately 180° and flattening or crimping the folded edge in order to stiffen and strengthen the edge) of the sides of the panels 1 may be carred out at a separate station (not shown) between the fixing station 10 and the second pair of pinch rolls 11 or it may be carried out after cutting into individual panels 1. Additionally, edge rolling of the panel ends may be carried out after cutting into individual panels. As an alternative to rolling, the edges may be strengthened by sewing the two sheets of foil together using a glass fibre or other high temperature resistant thread.

The wire 2 may be laid in a uniform pattern or in a manner which provides a different pattern at different parts of the panel 1. This may be to vary the heat flux in a controlled manner over different areas of the panel, it may be to facilitate manufacture of electrical connections, as described below, or for any other reason.

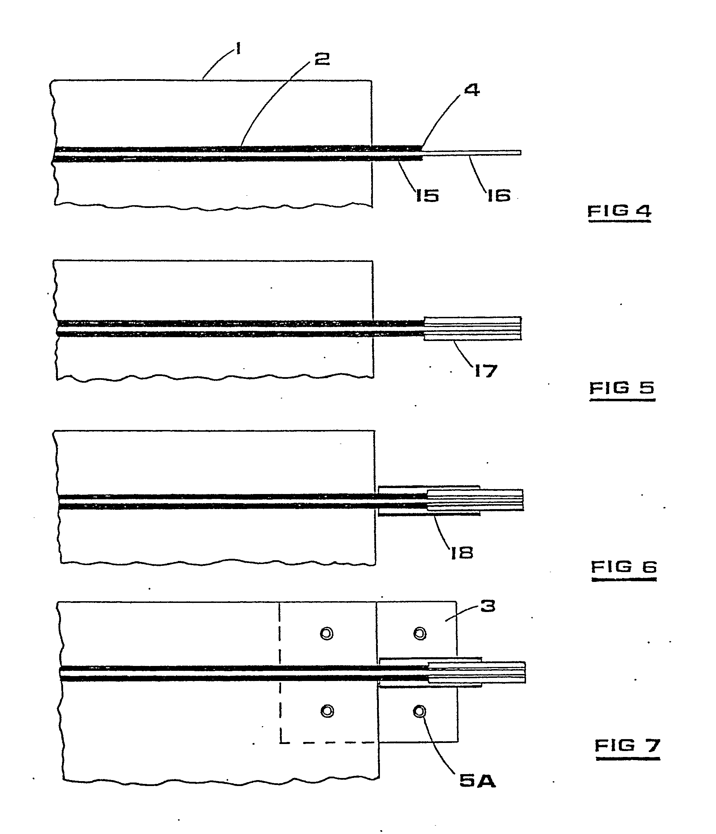

In the continuous laminate shown in Figure 3 prior to cutting into separate panels, the wire 2 is layed with an extended pass and pitch 13 at the intended ends of the panels, so that the individual panels, formed by cutting along join lines 14, leaves a free length of wire, a tail 4 at both ends and leaves additional foil for reinforcing the ends of the panels.

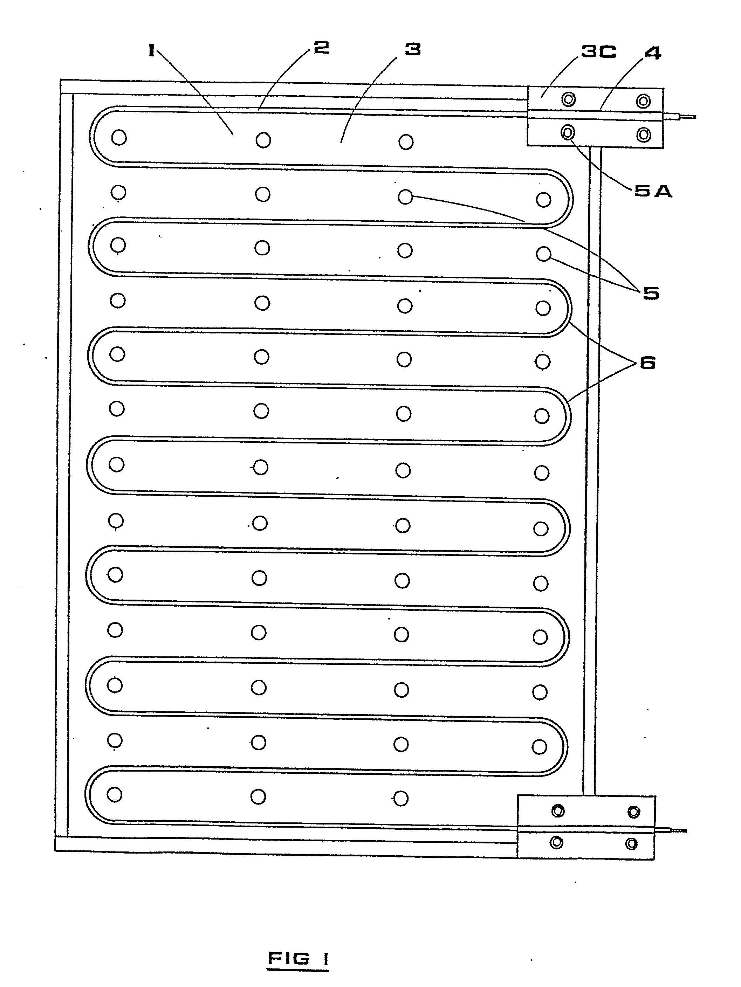

The tails 4 may leave the panel as shown in Figure 1 and Figure 3 or in a variety of other configurations according to the user requirements and the method of manufacture. Reinforcing round the tails may be applied as shown in Figure 1, by other means or may not be applied in light duty applications.

In the case of heating panels which are subject to applications involving high temperature, high heat flux or both, the normal rating of the wire may be well exceeded provided that arrangements are made to dissipate the heat from the tails 4. This may be achieved in several ways, one of which is described in detail with reference to

Figures 4, 5, 6 and 7. As shown in Figure 4, the tail 4 projects from one edge of the panel and insulation 15 is stripped from wire core 16 over a part length of the tail 4. As shown in Figure 5, a conducting sleeve 17 is then positioned over the bared wire core 16 and crimped to the wire core in a plurality of positions (crimping not shown in the Figures). As shown in Figure 6, a length of insulating sleeve 18, such as woven glass sleeve, is then positioned over the insulated wire 2 and over a portion of the conducting sleeve 17, leaving an exposed end of the conducting sleeve 17 for making the necessary electrical connection. Pieces of aluminium foil 3C are positioned both sides of the panel corner and the tail, as shown in Figure 7, so that the conducting sleeve 17 remains insulated from the pieces of foil 3C and the pieces of foil are secured to the panel 1 and each other by rivets 5A.

CLAIMS

1. A laminar heating panel (1) comprising a resistance wire (2) insulated with a glass fibre wrapping (18) or other glass or ceramic coating, the wire (2) being enclosed between close fitting first and second layers (3, 3A, 3B) of heat conducting material, with mechanical connection means (5) connecting the first and second layers (3, 3A, 3B) together.

2. A panel as claimed in Claim 1, wherein the wire is in the form of a spiral, or alternatively incorporates a plurality of return bends, to provide a considerable wire length within a panel of predetermined size.

3. A panel as claimed in Claim 1 or Claim 2, wherein the return bends (6) of the wire (2) are curved, acute angled, or rectangular.

4. A panel as claimed in any one of Claims 1 to 3, wherein at least one of the two heat conducting layer (3, 3A, 3B), is of foil.

5. A panel as claimed in Claim 4, wherein both layers (3, 3A, 3B) are of foil.

6. A panel as claimed in Claim 4, wherein the first layer (3, 3A, 3B), is of a relatively rigid heat conducting sheet, and the second layer (3, 3A, 3B) is of foil.

7.   A panel as claimed in any one of Claims 1 to 6, wherein the foil layer(s) (3, 3A, 3B) is a metal foil layer of aluminium, nickel or other ductile metal alloy.

8.   A panel as claimed in any one of Claims 4 to 7, wherein close contact between the wire (2) and the two layers (3, 3A, 3B), is effected by deforming the or each layer (3, 3A, 3B), around the wire (2).

9.   A panel as claimed in any one of Claims 1 to 8, wherein the wire is nickel-chromium, iron - chromium - aluminium, or other suitable resistance alloy.

10.   A method of manufacturing a panel as defined in any one of Claims 1 to 9, comprising:-

dispensing a first layer (3A) of heat conducting  material from a reel;

passing the dispensed first layer (3A) along a table (8) at which wire (2) is laid onto the first layer (3A);

dispensing a second layer (3B) of heat conducting material from a reel;

BAD ORIGINAL

passing the first layer (3A), the wire (2) and the second layer (3B) through a first pair of pinch rollers (9) which are covered with resilient material so as to deform the layers (3A and 3B) around the wire (2);

passing the first layer (3A) - wire (2) - second layer (3B) laminate to a fixing station at which the layers (3A and 3B) are mechanically connected together;

passing the laminate of part made panels (1) to a second pair of pinch rollers (11); and

thereafter passing the laminate to a cutting station (12) at which the individual panels (1) are separated, by being cut from the laminate.

FIG 1

FIG 2

FIG 3

0117001

FIG 4

FIG 5

FIG 6

FIG 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A-1 356 748 (WARMEX LTD.)<br><br>* Page 2, lines 16-36; figure 1 * | 1-3,6,<br>7 | H 05 B 3/22<br>H 05 B 3/64<br>F 24 D 13/02 |
| A | GB-A- 635 233 (PYROTENAX LTD.)<br>* Page 4, lines 50-53; figure 5 * | 1-3,7 | |
| A | US-A-3 010 007 (THEODORE et al.)<br>* Column 1, last paragraph; column 2, lines 1-30 * | 1-5,7,<br>8,10 | |
| A | US-A-3 689 994 (STODDARD)<br>* Column 6, paragraphs 2,3; figures 4-6 * | 1-3,9 | |
| A | DE-A-3 003 660 (KABEL- UND METALLWERKE GUTEHOFFNUNGSHÜTTE)<br>* Page 6, line 12 - page 7, line 2; figures 1,2 * | 10 | TECHNICAL FIELDS SEARCHED (Int. Cl. ³) |
| A | FR-A-2 266 416 (ETS. BONNET)<br>* Page 4, line 31 - page 5, line 3; figure 5 * | 10 | H 05 B<br>F 24 D |
| A | GB-A- 779 520 (WARMEX LTD.) | | |
| A | US-A-4 320 286 (BORRUP) | | |

--- -/-

The present search report has been drawn up for all claims

| Place of search<br>THE HAGUE | Date of completion of the search<br>29-05-1984 | Examiner<br>RAUSCH R.G. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

| European Patent Office | **EUROPEAN SEARCH REPORT** |
|---|---|

| DOCUMENTS CONSIDERED TO BE RELEVANT | | | Page  2 |
|---|---|---|---|
| Category | Citation of document with indication, where appropriate, of relevant passages | Relevant to claim | CLASSIFICATION OF THE APPLICATION (Int. Cl. ³) |
| A | GB-A-1 356 111  (SOUTH LONDON ELECTRICAL EQUIPMENT CO. LTD.) | | |
| | --- | | |
| A | US-A-2 610 286  (D. COX) | | |
| | ----- | | |
| | | | **TECHNICAL FIELDS SEARCHED (Int. Cl. ³)** |

The present search report has been drawn up for all claims

| Place of search | Date of completion of the search | Examiner |
|---|---|---|
| THE HAGUE | 29-05-1984 | RAUSCH R.G. |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO Form 1503 03 82